# EUROPEAN PATENT SPECIFICATION

(11) **EP 1 536 693 B1**
(45) Date of publication and mention of the grant of the patent: **16.04.2008**
(21) Application number: 03795587.9
(22) Date of filing: 06.08.2003
(51) Int. Cl.: A23K 1/18, A23K 1/16, C07C 31/02

(54) **METHODS AND FORMULATIONS USEFUL FOR LOWERING THE CHOLESTEROL CONTENT OF EGG YOLK**
VERFAHREN UND FORMULIERUNGEN, DIE SICH FÜR DIE REDUKTION DES CHOLESTERINGEHALTS VON EIGELB EIGNEN
METHODES ET FORMULATIONS POUR DIMINUER LE CHOLESTEROL CONTENU DANS LE JAUNE D'OEUF

(30) Priority: 10.09.2002 US 409469 P
(43) Date of publication of application: 08.06.2005
(73) Proprietor: Zomanex, LLC, Chesterfield, MO 63017 (US)
(72) Inventor: SPILBURG, Curtis A.,, Chesterfield, MO 63017 (US)
(74) Representative: Thomson, Paul Anthony
(86) International application number: PCT/US2003/024492
(87) International publication number: WO 2004/023888

(56) References cited:
- FR-A- 2 795 920
- US-A- 5 091 195
- US-A- 5 932 562
- US-B1- 6 197 832
- US-B1- 6 225 354
- ALI H.A.M., MAYES R.W., HECTOR B.L., ORSKOV E.R.: "The possible use of n-alkanes, long-chain fatty alcohols and long-chain fatty acids as markers in studies of the botanical composition of the diet of free-ranging herbovores" INTERNET ARTICLE, [Online] March 2003 (2003-03), XP002263554 ISBN: 0-906562-41-4 Retrieved from the Internet: <URL:http://www.bsas.org.uk/meetings/annlp roc/Pdf2003/155.pdf> [retrieved on 2003-12-02]
- JACOB J., MILES R.: "Designer and speciality eggs" INTERNET ARTICLE, [Online] November 2000 (2000-11), pages 1-4, XP002263557 Retrieved from the Internet: <URL:http://edis.ifas.ufl.edu/pdffiles/PS/ PS04800.PDF> [retrieved on 2003-11-28]
- CLARENBURG R., CHUNG I.A., WAKEFIELD L.M.: "Reducing the egg cholesterol level by including emulsified sitosterol in standard chicken diet" THE JOURNAL OF NUTRITION, vol. 101, no. 3, March 1971 (1971-03), pages 289-297, XP002263556 ISSN: 0022-3166
- GOUNI-BERTHOLD I., BERTHOLD H.K.: "Policosanol: Clinical pharmacology and therapeutic significance of a new lipid-lowering agent" AMERICAN HEART JOURNAL, [Online] vol. 143, no. 2, February 2002 (2002-02), pages 356-365, XP002263555 ISSN: 0002-8703 Retrieved from the Internet: <URL:http://www.genesiscenter.com/AmHeartJ .pdf> [retrieved on 2003-11-27]
- WEISS J.F., JOHNSON R.M., NABER E.C.: "Effect of some dietary factors and drugs on cholesterol concentration in the egg and plasma of the hen" THE JOURNAL OF NUTRITION, vol. 91, no. 1, pages 119-128, XP009022068
- SIM J.S., SUNWOO H.H.: "Designer eggs: Nutritional and functional significance" INTERNET ARTICLE, [Online] 13 November 2003 (2003-11-13), pages 1-19, XP002263558 Department of Agricultural, Food and Nutritional Science, University of Alberta Retrieved from the Internet: <URL:http://animalscience.ucdavis.edu/avia n/sim.pdf> [retrieved on 2003-11-28]
- NABER E C: "Nutrient and drug effects on cholesterol metabolism in the laying hen." FEDERATION PROCEEDINGS. UNITED STATES 15 MAY 1983, vol. 42, no. 8, 15 May 1983 (1983-05-15), pages 2486-2493, XP009022065 ISSN: 0014-9446 cited in the application
- HARGIS P.S.: "Modifying egg yolk cholesterol in the domestic fowl - a review" WORLD'S POULTRY SCIENCE JOURNAL, vol. 44, no. 1, 1988, pages 17-29, XP009022140 ISSN: 0043-9339

## Description

### BACKGROUND OF THE INVENTION

This invention relates generally to a method for lowering the cholesterol content of an egg yolk. This invention also relates generally to a method comprising feeding an egg laying fowl a feed which enables the fowl to lay an egg having lower cholesterol content.

Elevated serum cholesterol is a major risk factor for human coronary heart disease, the leading cause of death and medical expenditure in the United States. The National Cholesterol Education Program defines ideal serum total cholesterol as a value less than 200 mg/dL, levels between 200-200 mg/dL as borderline high and levels above 200 mg/dL as high.

Since high intake of dietary cholesterol has been identified as a factor that contributes to elevated serum cholesterol, the National Cholesterol Education Program recommends Therapeutic Lifestyle Changes that include the reduction of consumption of cholesterol to 200 mg per day (National Cholesterol Education Program (2001) JAMA 285, 2086). Based on this recommendation, the intake of certain foods must be closely monitored. For example, a single large egg (59 grams) contains about 300 mg of cholesterol, so that its dietary consumption would provide an excess of the recommended daily amount [Alpers, D.H., Stenson, W.F. and Bier, D.M. (1995) Manual of Nutritional Therapeutics, Little Brown and Company, 3rd edition, Boston, MA p. 470]. Because of the risk factor associated with elevated cholesterol, human egg consumption has decreased over the years even though this food contains a number of beneficial nutrients.

Numerous strategies have been proposed for reducing the cholesterol content of eggs in order to maintain their nutritional benefit while at the same time lowering their potential contribution to the risk of heart disease. These strategies rely on chemical or physical means to remove cholesterol from the yolk portion of the egg. For example, a variety of organic solvent extraction methods (dimethyl ether) have been described [Yano et al., U.S. Patent 4,069,351; Yano et al., U.S. Patent 4,234,619]. These processes are characterized by the use of environmentally hazardous solvents that are not healthy for human consumption in foodstuffs. Alternatively, physical methods such as centrifugation are lengthy, expensive and time consuming [Nath & Newbold, U.S. Patent 3,958,034; Bracco & Viret, U.S. Patent 4,333,959]. There have also been reports that describe highpressure extraction of egg yolk cholesterol into vegetable oil followed by the isolation of the cholesterol for industrial use [Zeidler, U.S. Patent 5,468,511].

To avoid all these manipulations, it would be of great advantage to have a procedure that lowered the cholesterol content of egg by the addition of a suitable agent to feed.

For over fifty years, plant sterols have been recognized as agents that lower the absorption of cholesterol and the level of LDL-cholesterol in humans. Unless otherwise noted, throughout this patent, plant sterol will refer to all chemical forms, i.e. sitosterol, campesterol, brassicasterol, etc., their reduced counterparts and their esters with long chain fatty acids. Based on this observation, these naturally-occurring compounds have been added to chicken feed as a strategy to lower circulating cholesterol levels in laying hens and thereby alter the cholesterol content in yolk. In initial work, when chickens were fed 2% and 4% sitosterol that had been emulsified with carboxymethyl cellulose, there was a significant reduction in cholesterol and total sterol content of the egg. Moreover, this feeding strategy also increased the level of egg yolk sitosterol, presumably by increasing the bioavailability of the emulsified plant sterol in the chicken feed [Clarenburg et al. (1971), J. Nutr. 101, 289]. These positive results are in contrast to other studies in which the same emulsification system was used, but with little or no effect. For example, when hens were fed 4% plant sterols emulsified with carboxymethyl cellulose and alcohol, there was little effect on the egg cholesterol content, a result that is similar to that found when unemulsified plant sterols were added to chicken feed [Kudchodkar et al. (1976), J. Nutr. 106, 1629; Weiss et al. (1967) J. Nutr. 91,119]. Based on a review of all these studies, Naber concluded that "dietary plant sterols and fiber may moderate egg cholesterol deposition but the conditions under which this takes place are not well defined" [Naber (1983) Fed. Proc. 42, 2086].

In another approach, low phytate phosphorous feed has been shown to reduce cholesterol in animals and specifically in the eggs produced by hens that consume such feed. Based on this observation, it has been proposed that low cholesterol containing eggs can be produced by feeding chickens a diet that contains corn that has been genetically modified to contain low phytate [Stilborn et al., U.S. Patent 6,391,348].

In yet another approach, research showed that feeding hens an all-vegetarian diet lowered cholesterol content of eggs [Jacob J. and Miles R., (2000), "Designer and Specialty Eggs"]. Similarly, in an effort to produce low cholesterol eggs, a feed for hens consisting of dried cabbage (*Brassica Oleracea*) reduced the cholesterol content of eggs laid by the hens [Havens, U.S. Patent 5,091,195]. While a publication reported that *Brassica Oleracea* contains long chain fatty alcohols (polycosanols), [Ali et al., (2003), "The possible use of n-alkanes, long-chain fatty alcohols and long-chain fatty acids as markers in studies of the botanical composition of the diet of free-ranging herbivores"], the cholesterol lowering of eggs seen in the art by using this vegetable as feed for hens is likely do to a non-specific change in fiber content that may affect cholesterol absorption.

In recognition that "it is extremely difficult to reduce egg cholesterol levels to any great extent by dietary means," Elkin and Rogler used pharmacological agents as a potential new approach for altering avian egg yolk concentration [Elkin & Rogler (1990) J. of Agric. Food Chem. 38, 1635]. In a series of feeding studies, they demonstrated that inhibition of the rate-limiting enzyme of the hepatic cholesterol biosynthetic pathway (3-hydroxy-3-methylglutaryl-coenzyme A reductase) altered the cholesterol content of eggs. Thus, hens fed 0.0265% lovastatin for 35 days produced eggs that contained 15% less cholesterol than those from hens that received only a corn-soybean diet. Even though this methodology demonstrated that manipulating biochemical pathways could alter the cholesterol content of eggs, its utility has been questioned because of the high expense of these inhibitors and the possibility that their metabolites may be found in eggs.

None of the above mentioned technologies have resulted in a practical, useful, and commercially acceptable feed additive for lowering egg cholesterol.

Recently, long chain primary aliphatic alcohols (polycosanols), components of sugar cane wax, beeswax and rice bran wax have been reported to lower serum cholesterol in rodents, dogs, monkeys, swine and chickens, and their effect in humans has been reviewed [Gouni-Berthold & Berthold (2002) Am. Heart J. 143, 356]. While the pharmacology of these compounds is not known, it is generally believed that their biological activity is based on their ability to inhibit hepatic cholesterol biosynthesis at some point in the HMG CoA reductase pathway. Because of this biological activity, it has been proposed to mix these alcohols with plant sterols and stanols to produce a supplement that can reduce human cholesterol by two different mechanisms of action [Sorkin (2001), U.S. Patent 6,197,832]. Thus, human LDL-cholesterol can be lowered by polycosanols that inhibit cholesterol synthesis and plant sterols that block small intestinal cholesterol absorption. However, aliphatic long chain alcohols and plant sterols and stanols are virtually insoluble in water and, as a result, their simple combination may not result in enhanced cholesterol lowering. Indeed, it has been shown that prosper formulation is required to enhance bioavailability of sterols and stanols [Ostlund (1999), U.S. Patent 5,932,562]. It is also not predictable from a test that shows lower blood serum cholesterol levels that egg yolk levels of cholesterol will necessarily also be lowered. This is evident from the art here discussed.

Wax esters have the general formula R₁COOR₂, and they are composed of moieties derived from long chain fatty acids (R₁COOH) and long chain alcohols (R₂OH), called polycosanols. Here R₁ and R₂ are C20 or greater. The wax component may contain polycosanols, but the majority of this component is present in the esterified form. Polycosanols can be routinely isolated in good yield by simple modification of the standard textbook saponification used for all lipid esters. [Kates, M. "Techniques of Lipidology," 1986, 2nd revised edition, R.H. Burdon and P.H. van Knippenberg, eds., Elsevier, New York, NY, pp 125-127; Granja, et al. (1997) U.S. Patent 5,663,156; Perez, P. (2001) U.S. Patent 6,225,354]. Following these procedures, it has been found that the alcohol component of wax esters has a carbon chain length that varies from source to source. Thus, the major component in beeswax and rice bran wax is octacosanol (C₂₈H₅₈O) while triacontanol (C₃₀H₆₂O) is the predominant alcohol in rice bran wax. For the discussion here, the term polycosanol will refer to an alcohol or ester derived therefrom with a chain length greater than twenty carbons.

A primary object of the current invention is to extend the use of polycosanols, either in their free form or as a chemical derivative, as feed additives to alter the cholesterol content of eggs. Without being bound by theory, it is believed that the addition of these naturally-occurring long chain alcohols to conventional chicken feed inhibits hepatic cholesterol synthesis thereby lowering the level of cholesterol in the hen's circulatory system. Because there is less available circulating cholesterol in the chicken, it is believed that the chicken egg yolk produced from a chicken consuming polycosanol or its derivatives will contain less cholesterol. It is surprising this works because it is not self evident that the polycosanols are palatable to poultry or that they would, in fact, lower egg cholesterol.

### SUMMARY OF THE INVENTION

Briefly, this invention comprises feeding an egg laying fowl a feed containing a cholesterol lowering effective amount of wax derived from a suitable plant, animal or marine source, and/or its long chain (C₂₀ or greater) aliphatic alcohol components. In one preferred embodiment, this method comprises having the egg laying fowl consume a feed containing oil (soybean, canola, rapeseed, corn and the like) that has been fortified by the addition of a wax derived from a suitable plant, animal or marine source, and/or its long chain (C₂₀ or greater) aliphatic alcohol components. In another embodiment this method comprises feeding and having the egg laying fowl consume a composition which is a solid, but in water dispersible form which comprises an aqueous homogeneous micellar mix of a plant sterol, lecithin and a crude un-fractionated wax, derived from a suitable plant, animal or marine source, which combination has been dried to a finely divided water dispersible solid wherein the weight ratio of lecithin to the combination of plant sterol and crude un-fractionated wax may vary from about 0.45 to about 100.0. In yet another embodiment this method comprises feeding an egg laying fowl and having the egg laying fowl consume a composition which is a solid, but in water dispersible form which comprises an aqueous homogeneous micellar mix of a plant sterol, lecithin and a mixture of aliphatic long chain alcohols (C₂₀ or greater), derived from the wax from a suitable plant, animal or marine source, in which the combination has been dried to a finely divided water dispersible solid wherein the weight ratio of lecithin to the combination of plant sterol and aliphatic long chain alcohols may vary from about 0.45 to about 100.0.

### DETAILED DESCRIPTION OF THE INVENTION

A method is provided that allows an egg laying fowl such as a laying hen to lay an egg that contains less cholesterol than it normally would.

The method of this invention is pertinent to species that lay eggs which are consumed by humans. As used herein, the term "fowl" includes chickens, ducks, geese, guinea fowl, peafowl, pigeons, ostriches, turkeys and members of the order Galliformes. The additives described herein can easily be incorporated in an effective amount into the diet of the aforementioned species of egg laying fowl to provide (by laying) a corresponding edible egg with a yolk having lowered cholesterol content. While some embodiments are described with respect to chickens and hens, it is intended that that description applies to edible egg laying fowl in general.

Importantly, the methods described herein use conventional feed normally used for egg laying fowl to provide a nutritionally balanced diet, and do so without adversely effecting palatability. Typically, egg-laying fowl such as a hen are fed a growing and egg laying feed composition that includes grains and grain by-products, protein-producing seeds and meal made from them such as canola or soybean meal. Egg laying fowl such as chickens are fed an effective amount of other nutritional protein sources such as meat and bone meal vegetable fats and smaller levels of mineral and vitamin supplements. Other additives in chicken feed include enzymes and agriculturally acceptable antibiotics to prevent disease and digestive problems. A useful characteristic of the method described below is that it is compatible with conventional feed recipes.

In preparing a useful feed, it is desired to provide a uniform dispersion of an appropriate polycosanol wax homogeneously mixed into standard chicken feed. The polycosanol wax can be isolated from higher plants, such as rice bran, sugar cane and jojoba; animal species, such as beeswax; or marine organisms, such as orange roughly oil or zooplankton. For the most efficacious product, the wax is milled to a particle size of 125-500 microns and mixed with feed in an appropriate blender to produce a uniform dispersion.

In preparing another useful feed, the aliphatic long chain alcohols (polycosanols) are extracted from the above-referenced waxes using organic solvents, such as hexane, heptane or any other solvent that does not leave a toxic residue. Any common extraction procedure can be employed such as that described in, but not limited to, U.S. Patent 6,225,354. Alternatively, the aliphatic long chain alcohols can be extracted with organic solvent after the wax is saponified by a procedure described in, but not limited to U.S. Patents 5,633,156 and 5,856,316. For the most efficacious product, the solid aliphatic long chain alcohols isolated after solvent removal are milled to a particle size of 125-500 microns and blended with feed in an appropriate blender to produce a uniform feed mix.

In preparing another useful feed, a wax or its extracted aliphatic long chain alcohols are ground to a small particle size and dispersed with heating throughout a suitable oil, such as that from rapeseed, sunflower, canola, corn, cotton or any other suitable food grade oil. Alternatively, a suitable food-compatible organic solvent such as ethanol or methanol is used. With rapid mixing, the fortified oil or fortified ethanol solution is sprayed onto the chicken feed to produce a uniform mix.

In preparing another useful feed, it is desired to provide an aqueous homogeneous micellar mix of a phospholipid, plant sterol, and either the wax referenced above or the aliphatic long chain alcohols isolated from that wax. The preferred phospholipid is lecithin and its derivatives such as lysolecithin prepared by the action of phospholipase A₂ on soy lecithin. All of these compounds are commercially available from conventional food suppliers, such as Central Soya, Inc. (1946 West Cook Road, Fort Wayne, Indiana, 46801) and Archer Daniels Midland (4666 Faries Parkway, Decatur, Illinois, 62525). Other sources of lecithin can also be used, such as that from egg yolk.

Plant sterols useful herein are derived from soybeans, as a by-product of soybean oil production, but other plant sources can be used, such as but not limited to cottonseed, corn oil, olive oil, and rice bran. Soy sterols that are typically found in this commercial preparation consist of campesterol, sitosterol, stigmasterol plus small amounts of other compounds of similar structure. Plant stanols are not as abundant in nature but they can be easily made from plant sterols by catalytic hydrogenation of soy sterols and subsequent recrystallization. Soy stanols typically contain sitostanol and campestanol, but there are other compounds of similar structure present. Once again, other plant sources can be used as the starting material for hydrogenation, such as but not limited to cottonseed, corn oil, olive oil, and rice bran.

The wax-containing feeds or aliphatic long chain alcohols-containing feeds are fed to the egg laying fowl by providing an effective amount of a food in a trough, a food tray or other mechanical means accessible to the egg laying fowl. Water is provided by a watering trough or conventional watering means. In an embodiment of this invention, a water-dispersible or emulsion formulation comprising the wax or aliphatic long chain alcohols is effectively provided to an egg laying fowl by mixing an effective amount of the additive in drinking water supplied to the egg laying fowl. The egg laying fowl drinks the water containing the formulated wax or aliphatic long chain alcohols. An effective amount is that amount which brings about the benefits of the invention, i.e. lowering of egg cholesterol. Generally amounts within the range of 0.01 mg/kg bodyweight/day to I mg/kg bodyweight/day and preferably 0.05mg/kg bodyweight/day to 0.5 mg/kg bodyweight/day can be used.

The following example is offered to further illustrate this invention but not limit the invention in any way or manner.

### EXAMPLE 1:

### Preparation of Feed Containing Polycosanol or Polycosanol-Containing Wax

Free polycosanol or a polycosanol-containing wax derived from a suitable plant, animal or marine source consisting of long chain (C₂₀ or greater) aliphatic alcohols is milled to a particle size of 125-500 microns and thoroughly mixed in feed at a level to produce the desired cholesterol effect, namely a reduction in the egg cholesterol content.

To avoid the milling step, an alternative method can be employed. Polycosanol or a polycosanol-containing wax derived from a suitable plant, animal or marine source consisting of long chain (C₂₀ or greater) aliphatic alcohols is added to a boiling organic solvent, such as hexane, heptane or ethyl acetate. Solid formulated polycosanol or a polycosanol-containing wax can then be isolated by removing the organic solvent under a stream of hot gas as described elsewhere (U.S. Patent 4,508,703). This pulverulant solid is then added directly to animal feed at a level that produces the desired effect, namely the reduction of egg cholesterol content.

### EXAMPLE 2:

### Preparation of Feed Containing Formulated Polycosanol or Polycosanol-Containing Wax: Aqueous Method

Polycosanol or a-polycosanol-containing wax derived from a suitable plant, animal or marine source-consisting of long chain (C₂₀ or greater) aliphatic alcohols is added to a boiling organic solvent, such as hexane, heptane or ethyl acetate. After filtering off any insoluble material from the boiling solution, plant sterols, preferably from soy, are added at a weight ratio of 0.1 to 5.0. When the entire solid is dissolved, lecithin from soy or egg yolk or one of its derivatives, is added to the boiling mixture at a weight ratio of lecithin to the other two components that varies from 0.45 to 100.0. The organic solvent is removed with heating under a stream of nitrogen gas to produce a waxy solid that is subjected to a high vacuum to remove trace amounts of solvent. Water is then added to soften the solid and the temperature is raised and maintained at 80° C for at least twenty minutes. After vigorous stirring, blending or homogenization the creamy mixture is then dried by conventional means, such as spray drying or lyophilization. To aid in drying the mixture, starch or any other compatible drying aid is added such that its weight is about equal to that of the other solid components. The dried solid is then added to feed at a level that produces the desired effect, namely a reduction in the egg cholesterol content. In another embodiment, the dried solid can be added to water and thoroughly mixed to create a suspension that can be consumed as part of the laying hen's daily drinking water.

### EXAMPLE 3:

### Preparation of Feed Containing Formulated Polycosanol or Polycosanol-Containing Wax: Organic Solvent Method

Polycosanol or a polycosanol-containing wax derived from a suitable plant, animal or marine source consisting of long chain (C₂₀ or greater) aliphatic alcohols is added to a boiling organic solvent, such as hexane, heptane or ethyl acetate. After filtering off any insoluble material from the boiling solution, plant sterols, preferably from soy, are added at a weight ratio of 0.1 to 5.0. When the entire solid is dissolved, lecithin from soy or egg yolk or one of its derivatives, is added to the boiling mixture at a weight ratio of lecithin to the other two components that varies from 0.45 to 100.0. Solid formulated polycosanol or a polycosanol-containing wax can then be isolated by removing the organic solvent under a stream of hot gas as described elsewhere (U.S. Patent 4,508,703). This pulverulant solid is then added directly to animal feed at a level that produces the desired effect, namely the reduction of egg cholesterol content. Alternatively, the solid can be dispersed in water and thoroughly mixed to create a suspension that can be consumed as part of the laying hen's daily drinking water.

### EXAMPLE 4:

### Preparation of Feed Containing Formulated Polycosanol or Polycosanol-Containing Wax: Oil Method

The various solids described in Examples 1-3 can be dispersed in hot vegetable oils, including all those that are used in human food products, such as but not limited to canola oil, rapeseed oil, sunflower oil, safflower oil, corn oil or olive oil. The dispersed polycosanol or polycosanol-containing wax can then be sprayed on feed at a level to produce the desired effect, namely a reduction in the egg cholesterol content.

## Claims

1. A method of lowering egg cholesterol levels of eggs from laying fowl, comprising: administering to an egg laying fowl an egg cholesterol lowering amount of a polycosanol wherein-the amount of polycosanol administered is from 0.01 mg/kg bodyweight/day to 1 mg/kg of bodyweight/day.

2. The method of claim 1 wherein the polycosanol is at least C₂₀ in carbon chain length.

3. The method of claim 1 wherein the amount of polycosanol administered is from .05 mg/kg of bodyweight to 0.5 mg/kg of bodyweight of the fowl.

4. The method of claim 1 wherein administration is by mixing with a poultry feed.

5. The method of claim 1 wherein the polycosanol is administered in conjunction with a poultry feed containing an edible oil.

6. The method of claim 5 wherein the feed containing edible oil is selected from the group consisting of soybean, com, canola, sunflower and rapeseed oils.

7. The method of claim 1 wherein the polycosanol is mixed with a micellular mix of a plant sterol to provide a dried, water-soluble mix.

8. The method of claim 1 wherein the polycosanol is mixed with a micellular mix of a plant sterol and a phospholipid to provide a dried, water-soluble mix.

9. The method of claim 8 wherein the phospholipid is lecithin.

10. A method of lowering egg cholesterol of eggs from egg laying fowl, comprising: mixing an egg cholesterol lowering amount of polycosanol wherein the amount of polycosanol administered is from 0.01 mg/kg bodyweight/day to 1 mg/kg of bodyweight/day, with a poultry feed to provide a feed mix; and feeding said feed mix to egg laying fowl to lower egg cholesterol levels of eggs produced by said fowl.

## Patentansprüche

1. Verfahren zur Senkung des Cholesteringehalts von Eiern von Legehühnern, umfassend: Verabreichen einer das Cholesterin eines Eis senkenden Menge an Policosanol an ein Legehuhn, wobei die verabreichte Menge an Policosanol von 0,01 mg/kg Körpergewicht/Tag bis 1 mg/kg Körpergewicht/Tag beträgt.

2. Verfahren nach Anspruch 1, wobei das Policosanol wenigstens C₂₀ in Kohlenstoffkettenlänge ist.

3. Verfahren nach Anspruch 1, wobei die verabreichte Menge an Policosanol von 0,05 mg/kg Körpergewicht bis 0,5 mg/kg Körpergewicht des Huhns reicht.

4. Verfahren nach Anspruch 1, wobei die Verabreichung durch Mischen mit einem Hühner- bzw. Geflügelfutter erfolgt.

5. Verfahren nach Anspruch 1, wobei das Policosanol in Verbindung mit einem Geflügelfutter, das ein Speiseöl enthält, verabreicht wird.

6. Verfahren nach Anspruch 5, wobei das im Futter enthaltene Speiseöl aus der Gruppe bestehend aus Soja-, Mais-, Canola-, Sonnenblumen- und Rapsöl ausgewählt ist.

7. Verfahren nach Anspruch 1, wobei das Policosanol mit einer Mizellen-Mischung aus einem Pflanzensterin gemischt wird, um eine getrocknete, wasserlösliche Mischung zu erhalten.

8. Verfahren nach Anspruch 1, wobei das Policosanol mit einer Mizellen-Mischung aus einem Pflanzensterin und einem Phospholipid gemischt wird, um eine getrocknete, wasserlösliche Mischung zu erhalten.

9. Verfahren nach Anspruch 8, wobei das Phospholipid Lezithin ist.

10. Verfahren zur Senkung des Cholesterins eines Eis von Eiern von Legehühnern, umfassend: Mischen einer das Cholesterin eines Eis senkenden Menge an Policosanol, wobei die verabreichte Menge an Policosanol von 0,01 mg/kg Körpergewicht/Tag bis 1 mg/kg Körpergewicht/Tag beträgt, mit einem Geflügelfutter, um eine Futtermischung zu erhalten; und Verfüttern der Futtermischung an Legehühner, um den Cholesteringehalt der Eier zu senken, die von dem Geflügel produziert werden.

## Revendications

1. Procédé de réduction des taux de cholestérol de l'oeuf dans les oeufs issus de la volaille pondeuse, comprenant les étapes consistant à : administrer à une poule pondeuse d'oeufs une quantité d'un polycosanol permettant de réduire le cholestérol de l'oeuf, dans lequel la quantité de polycosanol administrée va de 0,01 mg/kg de poids du corps / jour à 1 mg/kg de poids du corps / jour.

2. Procédé selon la revendication 1, dans lequel le polycosanol est d'au moins C₂₀ en longueur de chaîne de carbone.

3. Procédé selon la revendication 1, dans lequel la quantité de polycosanol administré va de 0,05 mg/kg de poids du corps à 0,5 mg/kg de poids du corps de la volaille.

4. Procédé selon la revendication 1 dans lequel l'administration s'effectue par mélange avec des aliments pour volaille.

5. Procédé selon la revendication 1, dans lequel le polycosanol est administré conjointement à des aliments pour volaille contenant une huile alimentaire.

6. Procédé selon la revendication 5, dans lequel les aliments contenant de l'huile alimentaire sont sélectionnés parmi le groupe composé d'huiles de graine de soja, maïs, canola, tournesol et graines de colza.

7. Procédé selon la revendication 1, dans lequel le polycosanol est mélangé avec un mélange micellaire d'un phytostérol pour produire un mélange sec soluble dans l'eau.

8. Procédé selon la revendication 1, dans lequel le polycosanol est mélangé avec un mélange micellaire d'un phytostérol et d'un phospholipide pour produire un mélange sec soluble dans l'eau.

9. Procédé selon la revendication 8, dans lequel le phospholipide est de la lécithine.

10. Procédé de réduction du cholestérol de l'oeuf dans les oeufs issus de la volaille pondeuse d'oeufs, comprenant les étapes consistant à :
Mélanger une quantité de polycosanol permettant de réduire le cholestérol de l'oeuf, dans lequel la quantité de polycosanol administrée va de 0,01 mg/kg de poids du corps / jour à 1 mg/kg de poids du corps / jour, avec des aliments pour volaille pour produire un mélange alimentaire ; et donner ledit mélange alimentaire à manger à la volaille pondeuse d'oeufs pour réduire les taux de cholestérol de l'oeuf des oeufs produits par ladite volaille.
